(19) **Europäisches Patentamt**
**European Patent Office**
**Office européen des brevets**

(11) **EP 1 925 416 A1**

(12) **EUROPEAN PATENT APPLICATION**

(43) Date of publication:
**28.05.2008 Bulletin 2008/22**

(51) Int Cl.:
*B29C 44/12* (2006.01)   *B29C 70/66* (2006.01)
*B29C 70/08* (2006.01)   *B32B 5/18* (2006.01)

(21) Application number: **06077071.6**

(22) Date of filing: **21.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Lantor B.V.**
**3901 RG  Veenendaal (NL)**

(72) Inventor: **The designation of the inventor has not yet been filed**

(74) Representative: **van Loon, C.J.J. et al**
**VEREENIGDE**
**Johan de Wittlaan 7**
**2517 JR  Den Haag (NL)**

(54) **Compressible core material for closed mould systems**

(57)   The invention is directed to a core material for use in the production of fibre reinforced plastics materials, more in particular for use in closed mould systems. The core material of the invention comprises a foam structure with a plurality of compressible members.

It was found that such a core material combines a good compression resistance and low resin uptake with excellent resin flow properties. The core material is very suitable for resin transfer moulding techniques and can be very easily processed into a shaped articles.

**Description**

The invention is directed to a core material for use in the production of fibre reinforced plastics materials, more in particular for use in closed mould systems.

Plastics reinforced with fibrous webs may be used for manufacturing shaped articles such as automotive or industrial parts, *e.g.* tanks, bath tubs, road signs, cladding panels, boats, caravans, *etc*.

Fibrous webs are suitable as a reinforcement for all kinds of cured synthetic plastics materials, such as polyester resin or epoxy resin. Generally, the incorporation of a fibrous web in a resin material results in increased strength, stiffness, fatigue life, fracture toughness, environmental resistance, increased temperature stability, reduced weight and reduced manufacturing cost of said resin material.

The use of core materials in fibre reinforced plastics has been known for decades. The aim thereof is on the one hand to decrease the required amount of resin, resulting in cost and weight savings, and on the other hand to improve some mechanical properties of the material, more in particular the bending stiffness.

FR-A-2 646 442 and EP-A-0 694 643 describe so-called ROVICORE® material, which comprises a compressible web of synthetic fibre sandwiched between two reinforcing textile layers. The two reinforcing textile layers are stitched to the central compressible web which determines the thickness of the material. This material requires relatively large amounts of resin for the production of laminates, in particular when thicker laminates are requested.

EP-A-1 010 793 describes so-called SORIC® core material for closed mould systems which is based on a fibrous web containing a foam structure within the web. The core material has a compression resistance of greater than 90 % at 1 bar pressure and a permeability for resin of more than $5 \cdot 10^{-9}$ m$^2$. The SORIC® material has a good resin flow in the plane of the core material. However, the material has a high compression resistance. This is disadvantageous when different sheets of the core material are combined to form large area laminates. In particular, the high compression resistance causes the joints of different sheets to be visible in the final laminate. Furthermore, such a material with a high compression resistance may form wrinkles, which will cause visible creases on the surface. Also the thickness will undesirable vary in the end-product, giving the article unpredictable mechanical properties.

WO-A-2004/028776 describes a core material providing an improved surface finish of the laminated structures. The members and channels are irregularly distributed over the core material.

WO-A-2006/080840 describes a core material that can be easily welded to form large sized laminated structures by providing a gradient in the micro-spheres coverage on the edge of the core material.

An object of the present invention is to provide a new light weight core material which combines a low resin uptake with a fast flow of resin through the core material in all directions.

A further object of the invention is to provide a core material which can be easily processed into shaped articles.

Another object of the invention is to provide a core material which can used for the manufacture of large laminates by overlapping several sheets of core material, without forming visible joints at the overlapping sections.

A further object of the invention is to provide a core material which has a low bending stiffness and can easily be shaped around corners, *viz.* bent, formed and/or stretched around corners.

It has now been found that these objects are met, at least in part, by a core material comprising a foam structure with a plurality of members that provide good compression resistance and prevent a high amount of resin uptake.

Accordingly, the present invention is directed to a core material, suitable for use in resin transfer moulding, which core material comprises at least one fibrous web containing a foam structure within the web, said foam structure being formed of a plurality of members, which members are separated from each other by channels that are permeable to resin, which core material has a compression resistance at 1 bar of at least 30 % and a free volume with respect to the total volume of the core material of at least 50 vol.%, and wherein the channels have an average diameter of 0.75-3 mm and the members have an average diameter of the enveloping circle of 1-3 mm.

It was found that such a core material combines a good compression resistance and low resin uptake with excellent resin flow properties. The core material is very suitable for resin transfer moulding techniques and can be very easily processed into a shaped articles. Different sheets of the core material can advantageously be combined in order to manufacture large laminates by overlapping the sheets. It was surprisingly found that such overlaps do not result in visible joints in the laminate. Furthermore, the material of the present invention has good three-dimensional deformability which allows it to be easily bent around corners.

The term "compression resistance" as used in this application refers to the ability to resist a force that tends to crush or buckle. It is measured by determining the height of the material before applying a pressure and during applying 1 bar pressure perpendicular to the plane of the material. The compression resistance may be calculated as

$$\frac{100\ \% \times \left(\text{height of the material at 1 bar pressure}\right)}{\text{height of the material at no pressure}} \qquad (1)$$

The term "compressibility" may be defined as follows:

$$\text{compressibility} = 100\%\text{-compression resistance} \qquad (2)$$

The term "permeability" as used in this application refers to the rate of flow of a resin through the core material and is largely provided by the channels, formed by the areas containing no members. The permeability is defined herein according to the law of Darcy for steady flow.

$$q = \frac{k \cdot A}{\eta} \cdot \frac{\Delta p}{\Delta x}\ ,$$

wherein $q$ is the resin flow in $m^3/s^1$, $k$ is the permeability in $m^2$, $A$ is the total surface of the cross section through which the resin flows in $m^2$, $\eta$ is the viscosity of the resin in $Ns/m^2$, $\Delta p$ is the pressure difference in $N/m^2$, and $\Delta x$ is the distance over which the pressure difference exists and the resin flows in m. The permeability is defined in the plane of the material, that is not perpendicular to the material, but parallel to the upper and lower surface thereof.

The term "free volume" as used in this application refers to the volume of the material that can be accessed by resin. The free volume is expressed in volume percentage with respect to the total volume of the core material. The remainder of the volume will be a foam structure (and some fibres).

In accordance with the present invention, the core material has a compression resistance of least 30%, preferably 35-70 %. The core material will thus be compressed and hence become thinner, when pressure is applied in the mould. This has the advantage that when the material is applied such that there are overlapping portions, this overlapping will not necessarily result in a doubled thickness, while the core material will still have flowing properties in these overlapping portions.

The core material of the invention comprises a fibrous web, which is usually a non-woven based on conventional fibres. Examples of suitable bonding techniques for these fibres are: chemical bonding, needling and spunlacing. The non-woven may be reinforced. It is also possible to use a combination of a non-woven fibrous web with a reinforcing fabric, one within or on top of the other.

It is also possible to produce the fibrous web of the present invention by other techniques, such as weaving and knitting.

The fibres of the fibrous web are preferably selected from the group consisting of natural fibres, glass fibres, metal fibres, ceramic fibres or synthetic fibres, such as acrylic, polyethylene, polypropylene, polyester, polyamide (aramide), or carbon fibres and combinations thereof. More preferably, the fibres are selected from the group consisting of glass fibres, polyester fibres, polyester-polyethylene bicomponent fibres and combinations thereof. Very good results have been achieved with polyester fibres. Polyester fibres have found to have very good adherence with the resin and tend to have a favourable low moisture content. Examples of suitable bicomponent fibres are polypropylene-polyester bicomponent fibre and polyethylene-polypropylene bicomponent fibre.

The thickness of the fibres of the fibrous web may vary widely and depends on a number of factors. Among these factors are flow characteristics (i.e. the flow of the resin through the core material), fluidity, wetting characteristics, printabilty of the web, mechanical properties (which codetermines workability) and the surface finish of the final (resin coated) product. Also commercial availability may play a role. Fibre thickness is commonly expressed in dtex (gram per 10 000 meter fibre).

Typically the thickness may vary for instance from 1-50 dtex, *e.g.* from 2-40 dtex.

A web comprising only fibres having a low diameter (*e.g.* approximately 1.7 dtex), may give good printing results resulting in well defined members (or "islands"), but the flowing characteristics are not as good as they would be with a material comprising fibres of a higher diameter. The mechanical properties of such a web are characterized by a relatively low stretchability, because a relatively high amount of fibres are linked together by the members that are applied in the web.

On the other hand, a web comprising thicker fibres (*e.g.* 38 dtex fibres), is more difficult to print, because the surface area exposed to the printing surface is lower. Conversely, the mechanical properties of a web based on thicker fibres are characterized by a relatively high stretchability, because a relatively low amount of members are linked together.

The foam structure is preferably a closed shell foam structure and forms the members. It can be prepared from (optionally expandable) microspheres which are introduced into the web using an optionally foamed binder material.

The members form "isles" within or upon the web, which members are at least largely surrounded by channels, through which channels resin can flow. As a rule the material content in the channels should be low enough to allow a sufficient permeability to allow sufficient penetration of resin, preferably it should allow a permeability of at least $5 \cdot 10^{-10}$ $m^2$. The members are typically made of a closed cell foam structure, *e.g.* from a material that is usable as a binder material as disclosed herein. The members can also comprise micro-spheres or being formed thereof. These micro-spheres will be discussed below.

The members are preferably as impenetrable as possible to the resin. The members preferably have a permeability of less than $5 \cdot 10^{-13}$ $m^2$.

The members can have any shape. Good results have been achieved with a core material wherein at least the majority of the members are selected from the group consisting of members with circular, ellipsoidal and polygonal cross-sections parallel to the plane of the material. Of course combinations thereof may be employed. Preferred members with polygonal cross-sections are members with triangular, tetragonal, pentagonal, hexagonal, heptagonal, or octagonal cross-sections.

It has been found that particularly good results with respect to surface quality are obtained with a core material wherein the members are randomly distributed within or upon the web, in particular as described in WO-A-2004/028776.

The members have an average diameter, as defined by the diameter of the enveloping circle, in the plane of the material of less than 3 mm, preferably less than 2 mm. Preferably, at least the majority of members and more preferably substantially all members have a diameter in the plane of the material of less than 2.5 mm. Members with an average diameter of the members lower than 0.5 mm are not preferred with respect to the amount of resin uptake. Member average diameters of larger than 3 mm lead to undesirable print-through and surface scattering.

The channels between the members have an average diameter of less than 3 mm, preferably less than 2 mm. In order to provide good permeability to resin the average diameter of the channels is not less than 0.75 mm, preferably not less than 1 mm.

The permeability and the amount of free volume in the core material is mainly determined by the average diameter of the members in combination with the average diameter of the channels. The core material of the invention therefore advantageously combines an average diameter of the enveloping circle of the members of 1-3 mm with an average diameter of the channels of 0.75-3 mm. The surface finish of laminates produced from a core material wherein the average diameter of the members and the channels is greater than 3 mm is intolerable.

The core material can have an (uncompressed) thickness of 3-7 mm. In order to produce a laminate, the core material is compressed, thereby reducing the thickness of the core material. The thickness of the compressed core material is typically 1-5 mm, preferably 1.5 to 2 mm.

The free volume in the core material is preferably at least 50 %, more preferably at least 60 %, even more preferably 65-85 %. When the core material is compressed, this free volume is typically reduced to 20-65%, e.g. up to 30%.

A preferred web comprises at least 15 wt.% of fibres and up to 85 wt.% of binder material, which is optionally foamed.

The microspheres are preferably expandable and more preferably they have an activation temperature of at least 100 °C. In a preferred embodiment the core material comprises expanded thermoplastic microspheres, e.g. of a thermoplastic polymer based on an alkyl methacrylate (such as methyl methacrylate), acetonitril (such as polyacetonitril (PAN)), vinilydene chloride or a combination thereof. Other examples of suitable resins include one or more of polystyrene, styrene copolymers, polyvinyl chloride, vinyl chloride copolymers, and the like.

Commercially available micro-spheres include for example Expancel™ by AKZO-NOBEL.

The core material of the invention may be prepared using techniques known for producing the prior art core materials for the manual production of fibre reinforced plastic materials. The preparation may for example be based upon the methodology as described in EP-A-1 010 793. Preferably, the core material is made by rotary screen printing.

In a preferred method to produce a core material, expandable microspheres are introduced into a fibrous web, using a binder material, followed by expanding the microspheres and curing the binder. In a much preferred method the microspheres start to expand at temperatures below the curing temperature of the binder material. The core material may suitably be prepared in a method wherein a non-woven is printed with a foam or an unfoamed binder, also containing expanded microspheres, such as polymeric, glass or ceramic microspheres.

The thermoplastic synthetic polymer material of the microspheres preferably is solid at room temperature. In expandable microspheres, usually a blowing agent has been incorporated. The presence of this blowing agent is responsible for an expansion of the microspheres upon heating. The microspheres are pressed into the fibrous web in unexpanded form, for example by means of a paste, such as a foam paste, and are expanded afterwards. The blowing agent may be a chemical or physical blowing agent, such as azodicarbonamide; *iso*-butane; *iso*-pentane, pentane, freon, *iso*-octane *etc.*

The microspheres advantageously have a diameter of 4-40 $\mu$m in unexpanded state, and a diameter of preferably 10-120 $\mu$m in expanded state. After expansion of the microspheres, the amount thereof in the web is in general 10-60 vol.%. This amount depends on the amount of microspheres used and the degree of expansion thereof.

Suitable binders in this regard are for instance lower alkyl acrylate polymer, styrene-butadiene rubber, acrylonitrile polymer, polyurethane, epoxy resins, polyvinyl chloride, polyvinylidene chloride, and copolymers of vinylidene chloride with other monomers, polyvinyl acetate, partially hydrolyzed polyvinyl acetate, polyvinyl alcohol, polyvinyl pyrrolidone, polyester resins, and so forth. Optionally these binders can be provided with acidic groups, for example by carboxylating the binders. A suitable carboxylating agent is, for example, maleic anhydride. In addition, the binder, paste-like composition optionally contains water, surfactants, foam stabilizers, fillers and or thickeners, as has been described in EP-A-0 190 788.

The present invention further relates to a laminate at least consisting of a core material according to the invention, laminated with at least one fibrous fleece. The laminate may be formed in any way, and preferably by stitching or gluing the at least one fleece to one or both sides of the core material. Suitable methods of forming the laminate are known in the art.

An advantage of providing a laminate is the ease of use. The laminate can be placed in the mould in one step. Thus, the manufacturer of a composite does not have to staple different layers (*e.g.* respectively bottom fleece, core material, top fleece) into the mould in separate steps. As mentioned above, in the mould the core material is compressed as a result of the low pressure. As a consequence, the free volume of the core material is reduced, thereby reducing the amount of required resin.

In principle any fibrous fleece suitable for preparing a composite can be used. Preferred fibrous fleeces include glass fibre fleeces, carbon fibre fleeces, polyaramide fibre fleeces and hybrids thereof, e.g. glass-carbon fibre fleeces, glass-polyaramide fibre fleeces or carbon-polyaramide fibre fleeces.

A core material according to the invention has *inter alia* been found very suitable to make thin laminates. For example a laminate according to the invention may very suitably have a total thickness of 1-7 mm, preferably of 2-5 mm. Good results have *inter alia* been realised with a laminate of a core material with a thickness of about 4 mm covered at both sides with a fleece, preferably a glass fleece, with a starting thickness of approximately 1 mm on each side, *e.g.* a glass fleece of approximately 450 g/m$^2$. After compression, a laminate can be obtained having a total thickness of approximately 2.5-4 mm, which laminate has been found to have a very good surface quality after being cured with a resin, in particular with an unsaturated polyester resin or an epoxy resin.

The invention also encompasses a method for manufacturing a shaped article, wherein a fibrous web as described hereinabove is impregnated with a liquid resin and a hardener there for.

Suitable liquid resins for impregnating a fibrous web according to the invention are any synthetic plastic materials that can be applied in liquid form and be cured. Examples are polyester resins, phenylester resins, polyurethane resins, phenol resins, melamine formaldehyde resins and epoxy resins. Given the specifications of a shaped article to be manufactured, a skilled artisan will be able to suitably select an appropriate resin.

Suitable hardeners for use in a method according to the invention are any hardeners which can be used to cure the chosen liquid resin. These systems are known to the skilled person. It belongs to the standard knowledge of the person skilled in the art to be able to combine resin and hardener so as to obtain optimum results.

The present invention further relates to a shaped article based upon a core material according to the invention, in particular a shaped article obtainable by a method according to the invention wherein a core material according to the invention is compressed, impregnated with a resin and cured.

In order to manufacture large shaped articles, it was found possible to partly overlap different laminates comprising the core material and at least one fibrous fleece. Surprisingly, it has been found that the overlapping regions of the laminates does not result in a shaped article with visible joints.

**Claims**

1. A core material suitable for use in closed mould techniques, which core material comprises at least one fibrous web containing a foam structure within the web, said foam structure being formed of a plurality of members, which members are separated from each other by channels that are permeable to resin, which core material has a compression resistance at 1 bar of at least 30 % and a free volume with respect to the total volume of the core material of at least 50 vol.%, and wherein the channels have an average diameter of 0.75-3 mm and the members have an average diameter of the enveloping circle of 1-3 mm.

2. A core material according to claim 1, having a compression resistance at 1 bar of 35-70 %, preferably 40-55 %.

3. A core material according to claim 1 or 2, wherein the at least one fibrous web comprises fibres with a diameter of at least1 dtex, preferably 2 - 50 dtex.

4. A core material according to any one of the preceding claims, wherein the majority of said members, preferably substantially all members, have an average diameter of the enveloping circle of 1-2 mm.

5. A core material according to any one of the preceding claims, wherein the majority of said channels, preferably substantially all members, have an average diameter of at 1-2 mm.

6. A core material according to any one of the preceding claims, having a permeability for resin in the plane of the material of at least $5 \cdot 10^{-10} m^2$.

7. A core material according to any one of the preceding claims, wherein the members are randomly distributed within or upon the fibrous web.

8. A core material according to any one of the preceding claims, wherein at least part of the members are contain micro-spheres.

9. A core material according to any one of the preceding claims, wherein the fibres of the web are selected from the group consisting of natural fibres, glass fibres, metal fibres, ceramic fibres, synthetic fibres and combinations thereof.

10. A core material according to any one of the preceding claims, wherein the core material has a thickness of 3-7 mm.

11. A core material according to any one of the preceding claims, wherein the core material has a free volume with respect to the total volume of the core material of 65-85 %.

12. A laminate at least consisting of a core material according to any one of claims 1-9, laminated with at least one fibrous fleece.

13. A laminate according to claim 12, wherein the core material has a thickness of 1-3 mm.

14. A laminate according to claim 12 or 13, wherein the laminate has a total thickness of 1-7 mm, preferably 2-5 mm.

15. A laminate according to any one of claims 12-14, wherein the at least one fibrous fleece is selected from the group consisting of at least one type of fibre selected from the group consisting of glass fibres, carbon fibres and polyaramide fibres.

16. A laminate according to any one of claims 12-15, wherein the at least one fibrous fleece is glued or stitched to the core material.

17. A laminate according to any one of claims 12-16, wherein the laminate comprises at least two core materials according to any one of claims 1-9.

18. A process for preparing a shaped article, said process comprising placing a core material according to any one of claims 1-11 optionally in combination with one or more other non-woven fleeces, or a laminate according to any one of claims 12-16 in a closed mould, introducing a liquid resin into the mould and curing the resin to produce the article.

19. A process according to claim 18, wherein the resin is chosen from the group consisting of a polyester resin, a phenylester resin, an epoxy resin, a polyurethane resin, a melamine-formaldehyde resin or a phenol resin.

20. A shaped article obtainable by a method according to claim 18 or 19.

21. A shaped article based upon a core material according to any one of claims 1-11 or a laminate according to any one of claims 12-17.

**European Patent Office**

## EUROPEAN SEARCH REPORT

Application Number

EP 06 07 7071

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | EP 1 685 936 A (LANTOR BV [NL]) 2 August 2006 (2006-08-02) * paragraphs [0050] - [0056], [0064] * ----- | 1-21 | INV. B29C44/12 B29C70/66 B29C70/08 B32B5/18 |
| D,X | EP 1 010 793 A (LANTOR BV [NL]) 21 June 2000 (2000-06-21) * paragraphs [0035] - [0038], [0044] - [0049] * ----- | 1-21 | |

TECHNICAL FIELDS SEARCHED (IPC)

B29C

The present search report has been drawn up for all claims

| Place of search | Date of completion of the search | Examiner |
|---|---|---|
| The Hague | 7 May 2007 | Van Wallene, Allard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 07 7071

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2007

| Patent document cited in search report | | Publication date | Patent family member(s) | | Publication date |
|---|---|---|---|---|---|
| EP 1685936 | A | 02-08-2006 | WO | 2006080840 A1 | 03-08-2006 |
| EP 1010793 | A | 21-06-2000 | CA | 2292375 A1 | 16-06-2000 |
| | | | US | 6607997 B1 | 19-08-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2646442 A
- EP 0694643 A
- EP 1010793 A

- WO 2004028776 A
- WO 2006080840 A
- EP 0190788 A